Europäisches Patentamt

European Patent Office

Office européen des brevets

(19)

(11) EP 1 484 672 A1

(12) **DEMANDE DE BREVET EUROPEEN**

(43) Date de publication:
08.12.2004 Bulletin 2004/50

(51) Int Cl.⁷: **G06F 3/14**, H04L 29/06

(21) Numéro de dépôt: 04291193.3

(22) Date de dépôt: 10.05.2004

(84) Etats contractants désignés:
AT BE BG CH CY CZ DE DK EE ES FI FR GB GR
HU IE IT LI LU MC NL PL PT RO SE SI SK TR
Etats d'extension désignés:
AL HR LT LV MK

(30) Priorité: 04.06.2003 FR 0306733

(71) Demandeur: AIRBUS FRANCE
31060 Toulouse (FR)

(72) Inventeurs:
• Bernard, Denys
31480 Pelleport (FR)
• Fernandez-Ramos, Yvan
2 Rue de Montesquieu 31200 Toulouse (FR)

(74) Mandataire: Bonnetat, Christian
CABINET BONNETAT
29, rue de St. Pétersbourg
75008 Paris (FR)

(54) **Procédé et système de transmission d'information sur un aéronef**

(57) -Le système (1) qui est embarqué sur un aéronef comporte un dispositif (2) de type avionique, qui comprend un moyen (1 1 ) pour déterminer un premier code de contrôle représentatif d'une information que l'on souhaite afficher sur un écran de visualisation (12) d'un moyen d'interface (3) à la disposition d'un opérateur, le dispositif (2) transmettant une information vers le moyen d'interface (3) via une liaison (4), le moyen d'interface (3) qui comporte un moyen (10) pour déterminer une image correspondant à la représentation d'une information transmise et un moyen (13) pour déterminer un second code de contrôle représentatif de ladite image, et des moyens de comparaison (14) pour comparer les premier et second codes de contrôle, l'image étant affichée sur l'écran de visualisation (12) uniquement si les premier et second codes de contrôle sont identiques.

Fig. 1

## EP 1 484 672 A1

**Description**

La présente invention concerne un procédé et un système de transmission d'information sur un aéronef.

On sait que la plupart des aéronefs actuellement en service, notamment les avions de transport civil, sont équipés de dispositifs électroniques embarqués, notamment des calculateurs, dits "de type avionique". Ces dispositifs électroniques sont utilisés, notamment, pour des fonctions stratégiques du vol de l'aéronef telles que les commandes de vol. Ces dispositifs doivent, par conséquent, présenter un niveau de fiabilité très élevé, apte à garantir un taux de défaillance de l'aéronef inférieur à celui exigé par les autorités de certification. Les réseaux de communication et les liaisons entre de tels dispositifs (calculateurs) embarqués de type avionique, doivent répondre aux mêmes exigences de fiabilité.

Certains avions de transport modernes, tels que les avions de type "Airbus A340-600" et "Airbus A318" par exemple, comportent également des équipements embarqués dits "monde ouvert" ("open world" en anglais), lesquels ne sont pas spécifiques aux applications aéronautiques. Ces équipements "monde ouvert" sont des moyens d'interface (de type "homme-machine") à la disposition d'un opérateur, en particulier un pilote, de l'avion. A titre d'exemple non limitatif, on peut citer des calculateurs dits industriels, des ordinateurs portables, des imprimantes, ... Ces équipements "monde ouvert" présentent un niveau de fiabilité plus faible que celui des dispositifs précités de type avionique. Ils présentent néanmoins l'avantage d'être beaucoup moins chers que ces derniers et leur niveau de fiabilité est suffisant pour des applications qui ne sont pas directement liées à des manoeuvres de l'avion, telles que par exemple la consultation d'une documentation de maintenance ou l'aide au diagnostic pour la maintenance. Lorsqu'un avion comporte des moyens d'interface de type monde ouvert, il est parfois intéressant de pouvoir utiliser un ou plusieurs de ces moyens d'interface, pour permettre à un opérateur d'échanger des informations avec des dispositifs de type avionique. Cela peut notamment être utile, dans le cadre d'opérations de maintenance de l'avion, pour consulter des valeurs de paramètres disponibles dans les dispositifs de type avionique ou pour tester certains composants de l'avion (par exemple des circuits électriques, des gouvernes, ...), dont la manoeuvre est commandée par de tels dispositifs de type avionique.

Toutefois, même si ces opérations de maintenance présentent un caractère de criticité moindre que celui des phases de vol de l'avion, le niveau de fiabilité desdits moyens d'interface de type monde ouvert peut ne pas être suffisant dans certains cas. Ainsi, à titre d'exemple, lorsqu'une opération de maintenance implique la manoeuvre d'une gouverne, il est impératif que cette dernière ne se déclenche pas de façon intempestive, puisqu'un déclenchement intempestif pourrait être dangereux pour des personnels se trouvant à proximité de ladite gouverne. De même, lorsqu'une opération de maintenance suppose la manipulation d'équipements électriques, l'opérateur doit s'assurer que ces équipements ne sont pas sous tension, une information erronée pouvant avoir des conséquences fatales.

Par conséquent, il est généralement fortement déconseillé, notamment pour des raisons de fiabilité et donc de sécurité, de mettre en oeuvre sur un aéronef une transmission d'informations sensibles entre un dispositif de type avionique, tel que décrit précédemment, et un moyen d'interface de type précité.

La présente invention a pour objet de remédier à ces inconvénients. Elle concerne un procédé permettant de réaliser une transmission d'information particulièrement fiable sur un aéronef, d'un dispositif de type avionique vers au moins un moyen d'interface (de type "monde ouvert") qui est à la disposition d'un opérateur dudit aéronef, ladite information transmise étant destinée à être affichée par ledit moyen d'interface sur au moins un écran de visualisation, et ledit dispositif et ledit moyen d'interface étant susceptibles d'être reliés ensemble par l'intermédiaire d'une liaison de transmission d'information.

A cet effet, selon l'invention, ledit procédé est remarquable en ce que :

a) ledit dispositif détermine un premier code de contrôle qui est représentatif de l'information que l'on souhaite afficher sur ledit écran de visualisation dudit moyen d'interface ;
b) on transmet ladite information dudit dispositif vers ledit moyen d'interface, via ladite liaison de transmission d'information ;
c) ledit moyen d'interface détermine une image correspondant à la représentation de ladite information ainsi transmise ;
d) ledit moyen d'interface détermine un second code de contrôle qui est représentatif de ladite image ;
e) on compare lesdits premier et second codes de contrôle ; et
f) uniquement si lesdits premier et second codes de contrôle sont identiques, ledit moyen d'interface affiche, sur ledit écran de visualisation, ladite image correspondant à la représentation de ladite information.

Ainsi, grâce à l'invention, une image est uniquement affichée s'il apparaît une identité entre les deux codes de contrôle, à savoir entre ledit premier code de contrôle qui est déterminé avant la construction de l'image (à partir de l'information à transmettre et à afficher) et qui constitue ainsi une prédiction de ce que devrait être le second code de contrôle, et ledit second code de contrôle qui est représentatif de l'image (correspondant à l'information transmise) après sa construction. Bien entendu, en l'absence d'erreur lors de la transmission de l'information, les deux codes de contrôle sont identiques. Grâce à ce contrôle, on obtient une transmission d'information particulièrement fiable. Le risque pour la sécurité est donc très faible.

De plus, le procédé conforme à l'invention permet d'afficher une information de façon fiable en ne transmettant qu'un nombre restreint de données du dispositif de type avionique vers le moyen d'interface de type "monde ouvert", utilisé pour la visualisation de l'information. Ainsi, l'information peut être transmise sous une forme (textuelle, numérique, ...) ne nécessitant la transmission que d'une faible quantité de données, plutôt que sous la forme d'une image à afficher sur ce moyen d'interface de type "monde ouvert", qui nécessiterait, elle, un nombre de données beaucoup plus important. De plus, grâce à l'invention, il n'est pas nécessaire de déterminer (ou construire) l'image à l'aide du dispositif de type avionique, ce qui permet de décharger ledit dispositif de cette tâche de détermination d'image qui nécessite généralement un temps de calcul non négligeable.

On notera que l'image d'une information ou d'un message est formée par concaténation des images élémentaires des caractères constituant ladite information ou ledit message. Par exemple, l'image de 'ABCD' est constituée en juxtaposant les images élémentaires de 'A', 'B', 'C' et 'D'.

Dans un premier mode de réalisation, à l'étape e), ledit moyen d'interface transmet ledit second code de contrôle audit dispositif, qui compare alors lesdits premier et second codes de contrôle et transmet le résultat de cette comparaison audit moyen d'interface.

Dans un second mode de réalisation, ledit dispositif transmet ledit premier code de contrôle audit moyen d'interface, qui compare lesdits premier et second codes de contrôle à ladite étape e).

La présente invention concerne également un système de transmission d'information, embarqué sur un aéronef.

Selon l'invention, ledit système du type comportant :

- au moins un dispositif de type avionique ;
- au moins un moyen d'interface à la disposition d'un opérateur, et comprenant au moins un écran de visualisation ; et
- au moins une liaison de transmission d'information susceptible de relier ensemble ledit dispositif et ledit moyen d'interface,

est remarquable en ce que :

- ledit dispositif comporte un moyen pour déterminer un premier code de contrôle qui est représentatif d'une information que l'on souhaite afficher sur ledit écran de visualisation dudit moyen d'interface ;
- ledit dispositif est formé pour transmettre une information vers ledit moyen d'interface, via ladite liaison de transmission d'information ;
- ledit moyen d'interface comporte un premier moyen pour déterminer une image correspondant à la représentation d'une information transmise, et un second moyen pour déterminer un second code de contrôle qui est représentatif de ladite image ;
- ledit système comporte, de plus, des moyens de comparaison pour comparer entre eux des premier et second codes de contrôle ; et
- ledit moyen d'interface est formé pour afficher, sur ledit écran de visualisation, une image correspondant à la représentation d'une information transmise, uniquement si les premier et second codes de contrôle correspondants sont identiques.

Dans un premier mode de réalisation, lesdits moyens de comparaison font partie dudit dispositif, tandis que, dans un second mode de réalisation, lesdits moyens de comparaison font partie dudit moyen d'interface.

Les figures du dessin annexé feront bien comprendre comment l'invention peut être réalisée. Sur ces figures, des références identiques désignent des éléments semblables.

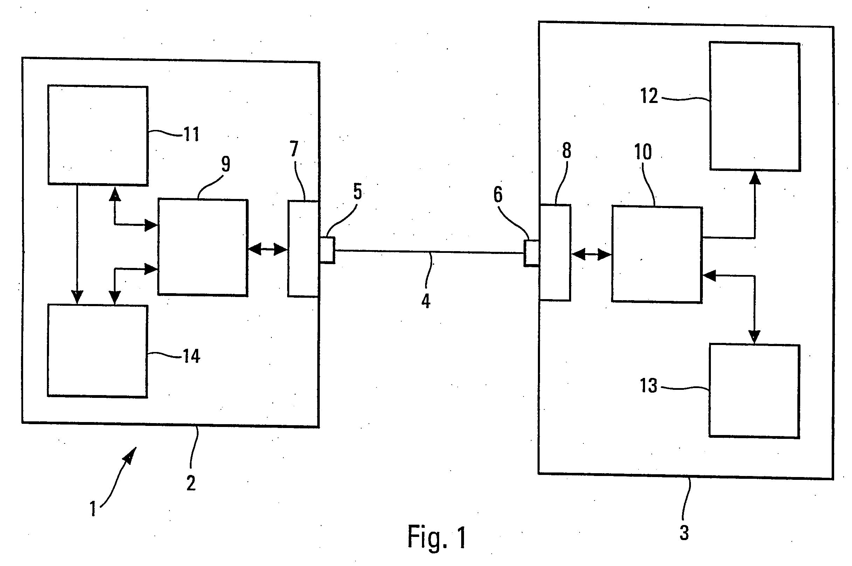

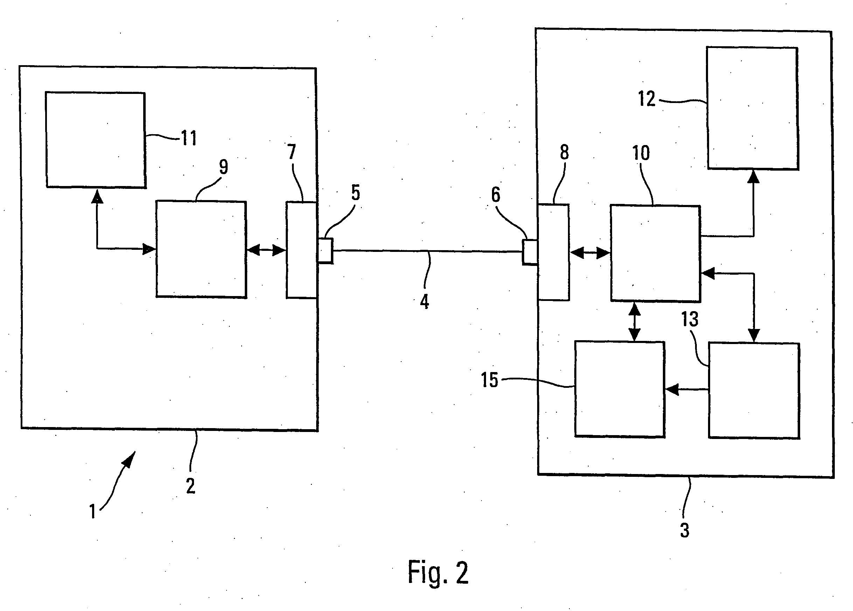

Les figures 1 et 2 sont les schémas synoptiques de deux modes de réalisation différents d'un système de transmission d'information conforme à l'invention.

Le système 1 conforme à l'invention et représenté schématiquement sur les figures 1 et 2 est destiné à la transmission d'information sur un aéronef non représenté, en particulier un avion de transport civil.

Plus précisément, ledit système 1 est du type comportant au moins :

- un dispositif électronique 2 de type avionique, notamment un calculateur, par exemple un calculateur de commande de vol, qui est monté à poste fixe sur l'aéronef et qui présente un niveau de fiabilité très élevé, apte à garantir un taux de défaillance de l'aéronef inférieur à celui exigé par les autorités de certification ;
- un moyen d'interface 3, par exemple un ordinateur portable, qui est à la disposition d'un opérateur de l'aéronef, qui est de type "monde ouvert", qui est également embarqué sur l'aéronef et qui présente une fiabilité réduite de manière à ne pas garantir généralement le taux de défaillance exigé par les autorités de certification de l'aéronef ; et

- une liaison de transmission d'information 4, de type usuel, susceptible d'être connectée par des moyens de connexion 5 et 6 usuels prévus à ses extrémités, respectivement, au dispositif 2 et au moyen d'interface 3, de manière à relier ensemble ces derniers et à permettre la mise en oeuvre d'une transmission d'information entre eux.

Par ailleurs, ledit dispositif 2 et ledit moyen d'interface 3 comportent également, chacun :

- un moyen d'acquisition de données 7, 8 ; et
- une unité de traitement de données 9, 10 qui est reliée audit moyen d'acquisition de données 7, 8.

L'objet du système 1 est, notamment, de permettre la transmission d'information du dispositif 2 vers le moyen d'interface 3.

Pour ce faire, selon l'invention :

- ledit dispositif 2 comporte un moyen 11 pour déterminer un premier code de contrôle C1 qui est représentatif d'une information que l'on souhaite afficher sur un écran de visualisation usuel 12 dudit moyen d'interface 3 ;
- ledit dispositif 2 est formé (unité 9) pour transmettre une information vers ledit moyen d'interface 3, via ladite liaison de transmission d'information 4 ;
- ledit moyen d'interface 3 comporte un moyen (unité 10) pour déterminer une image correspondant à la représentation d'une information reçue, et un moyen 13 pour déterminer un second code de contrôle 2 qui est représentatif de ladite image ;
- ledit système 1 comporte, de plus, des moyens de comparaison 14, 15 pour comparer entre eux des premier et second codes de contrôle C1 et C2 ; et
- ledit moyen d'interface 3 est formé pour afficher, sur ledit écran de visualisation 12, une image correspondant à la représentation d'une information, uniquement si les premier et second codes de contrôle C1 et C2 correspondants sont identiques.

Ainsi, grâce à l'invention, une image est uniquement affichée s'il apparaît une identité entre les deux codes de contrôle C1 et C2, à savoir entre ledit premier code de contrôle C1 qui est déterminé par le moyen 11 du dispositif 2 avant la construction de l'image et qui constitue ainsi une prédiction de ce que devrait être le second code de contrôle C2, et ledit second code de contrôle C2 qui est déterminé par le moyen 13 du moyen d'interface 3 et qui est représentatif de l'image après sa construction. Grâce à ce contrôle, on obtient une transmission d'information particulièrement fiable du dispositif 2 de type avionique vers le moyen d'interface 3 de type "monde ouvert". Le risque pour la sécurité de l'aéronef est donc très faible.

Ledit code de contrôle C1, C2 peut représenter notamment une somme de contrôle usuelle, de type "checksum". On sait qu'une telle somme de contrôle est une somme qui est calculée, non pas pour sa valeur intrinsèque, mais afin de vérifier l'intégrité des données de contrôle qui ont servi à l'établir. Ces données de contrôle sont soit des chiffres, soit d'autres caractères considérés comme des nombres au cours du calcul de la somme de contrôle.

De plus, le système 1 conforme à l'invention permet d'afficher, sur l'écran de visualisation 12 du moyen d'interface 3, une information de façon fiable, en ne transmettant qu'un nombre restreint de données du dispositif 2 de type avionique vers ledit moyen d'interface 3 de type "monde ouvert", qui est donc utilisé pour la visualisation de l'information. Ainsi, l'information peut être transmise sous une forme (textuelle, numérique, ...) ne nécessitant la transmission que d'une faible quantité de données plutôt que sous la forme d'une image, qui nécessiterait, elle, un nombre de données beaucoup plus important. De plus, grâce à l'invention, il n'est pas nécessaire de déterminer (ou construire) l'image à l'aide du dispositif 2 de type avionique, ce qui permet de décharger ledit dispositif 2 d'une telle tâche qui nécessite généralement un temps de calcul non négligeable.

Plus formellement :

- soit m, le message (ou information) à afficher sur le moyen d'interface 3. Cette information m est une suite de caractères alphanumériques. Par exemple, le message (ou information) "bonjour" est la suite de caractères : {'b', 'o', 'n', 'j', 'o', 'u', 'r'} ; et
- soit i, l'image qui représente l'information m (qui est matérialisée par un fichier informatique, c'est-à-dire une séquence de bits),

on suppose qu'il existe une fonction informatique A (mise en oeuvre par l'unité 10) qui permet d'engendrer l'image i à partir de l'information m : i=A(m).

On suppose de plus qu'il existe deux fonctions F et G mises en oeuvre respectivement par les moyens 13 et 11, qui permettent de calculer un élément d'intégrité (ou code de contrôle) c pour l'image : c=F(i)=G(m). La fonction F calcule donc l'élément d'intégrité (code de contrôle C2) à partir de l'image i, et la fonction G le calcule (code de contrôle C1) à partir du contenu du message m (à partir de codes "ASCII" par exemple). On précisera ci-après un exemple de telles fonctions F et G.

Dans un premier mode de réalisation préféré, représenté sur la figure 1, lesdits moyens de comparaison 14 font partie dudit dispositif 2. Ainsi, lors d'une transmission d'information, ledit moyen d'interface 3 transmet, via la liaison 4, ledit second code de contrôle C2 [ou F(i)] déterminé par le moyen 13, audit dispositif 2 qui compare alors, à l'aide desdits moyens de comparaison 14, lesdits premier et second codes de contrôle C1 et C2 et transmet, via la liaison 4, le résultat de cette comparaison (autorisation d'afficher ou interdiction d'afficher) audit moyen d'interface 3, qui affiche alors ou non l'image correspondante, sur l'écran de visualisation 12.

Dans un second mode de réalisation représenté sur la figure 2, lesdits moyens de comparaison 15 font partie dudit moyen d'interface 3. Ainsi, lors d'une transmission d'information, ledit dispositif 2 transmet ledit premier code de contrôle C1 [ou G(m)] audit moyen d'interface 3 qui compare alors, à l'aide desdits moyens de comparaison 15, lesdits premier et second codes de contrôle C1 et C2 et, en fonction de cette comparaison, affiche ou non l'image correspondante sur l'écran de visualisation 12.

On notera que, dans ce second mode de réalisation, le taux de détection d'erreur est moindre que dans le premier mode de réalisation (préféré) décrit ci-dessus, étant donné que la comparaison des codes de contrôle C1 et C2 est réalisée par l'équipement (moyen d'interface 3) de type "monde ouvert" qui présente une fiabilité moindre que l'équipement (dispositif 2) de type avionique.

On précise, ci-après, un exemple de mise en oeuvre de l'invention. Dans cet exemple, l'image i est un fichier informatique, composé d'un entête et de NxP bits, N étant le nombre de bits utilisés pour décrire un pixel, et P le nombre de pixels de l'image. L'en-tête contient des données usuelles qu'il n'est pas utile de détailler : dimensions de l'image, nombre de bits par pixels, ... Les pixels sont rangés par ligne (d'abord les pixels de la première ligne, puis les pixels de la deuxième ligne, ...).

La fonction A précitée (calcul de l'image) juxtapose les images des lettres représentant le message (ou l'information) :

$$m = \{'b','o','n','j','o','u','r'\} \xrightarrow{\quad A \quad} i = \boxed{b\,|\,o\,|\,n\,|\,j\,|\,o\,|\,u\,|\,r}$$

La fonction F (mise en oeuvre par le moyen 13 du moyen d'interface 3) calcule une somme de contrôle de type "checksum" de longueur L, sur la partie utile du fichier image (donc en excluant l'en-tête). L est choisi parmi les diviseurs de N.

La fonction G (mise en oeuvre par le moyen 11 du dispositif 2) calcule le code de contrôle C1, en additionnant les sommes de contrôle de longueur L de chacune des lettres de l'alphabet utilisé pour le message m. Par exemple :

$$G(m) = G('b') + G('o') + G('n') + G('j') + G('o') + G('u') + G('r').$$

Les valeurs G(x) pour tout caractère x de l'alphabet utilisé pour constituer les messages sont mémorisées par ledit dispositif 2 fiabilisé.

L'égalité F(i) = G(m) est garantie par le fait que L est un diviseur de N (nombre de bits utilisés pour définir un pixel), et le fait que le code de contrôle est calculé seulement sur la partie utile du topogramme binaire. Cet exemple peut être complété de manière à couvrir tout ou partie de l'en-tête, si une erreur de l'en-tête peut avoir un impact sur l'affichage : par exemple, on peut prendre en compte la longueur de ligne ou le nombre de lignes de l'image dans le calcul du code de contrôle (car ces nombres sont également prévisibles à partir du contenu du message, en prenant en compte la hauteur et la largeur des images élémentaires).

**Revendications**

**1.** Procédé de transmission d'information sur un aéronef, d'un dispositif (2) de type avionique vers un moyen d'interface (3) qui est à la disposition d'un opérateur dudit aéronef, information qui est destinée à être affichée par ledit moyen d'interface (3) sur au moins un écran de visualisation (12), ledit dispositif (2) et ledit moyen d'interface (3) étant susceptibles d'être reliés ensemble par l'intermédiaire d'au moins une liaison de transmission d'information (4),

**caractérisé en ce que** :

a) ledit dispositif (2) détermine un premier code de contrôle qui est représentatif de l'information que l'on souhaite afficher sur ledit écran de visualisation (12) dudit moyen d'interface (3) ;

b) on transmet ladite information dudit dispositif (2) vers ledit moyen d'interface (3), via ladite liaison de transmission d'information (4) ;

c) ledit moyen d'interface (3) détermine une image correspondant à la représentation de ladite information ainsi transmise ;

d) ledit moyen d'interface (3) détermine un second code de contrôle qui est représentatif de ladite image ;

e) on compare lesdits premier et second codes de contrôle ; et

f) uniquement si lesdits premier et second codes de contrôle sont identiques, ledit moyen d'interface (3) affiche, sur ledit écran de visualisation (12), ladite image correspondant à la représentation de ladite information.

2. Procédé selon la revendication 1,
   **caractérisé en ce qu'**à l'étape e), ledit moyen d'interface (3) transmet ledit second code de contrôle audit dispositif (2), qui compare alors lesdits premier et second codes de contrôle et transmet le résultat de cette comparaison audit moyen d'interface (3).

3. Procédé selon la revendication 1,
   **caractérisé en ce que** ledit dispositif (2) transmet ledit premier code de contrôle audit moyen d'interface (3), qui compare lesdits premier et second codes de contrôle à ladite étape e).

4. Système de transmission d'information embarqué sur un aéronef, ledit système (1) comportant :

   - au moins un dispositif (2) de type avionique ;
   - au moins un moyen d'interface (3) à la disposition d'un opérateur, et comprenant au moins un écran de visualisation (12) ; et
   - au moins une liaison de transmission d'information (4) susceptible de relier ensemble ledit dispositif (2) et ledit moyen d'interface (3),

   **caractérisé en ce que** :

   - ledit dispositif (2) comporte un moyen (11) pour déterminer un premier code de contrôle qui est représentatif d'une information que l'on souhaite afficher sur ledit écran de visualisation (12) dudit moyen d'interface (3) ;
   - ledit dispositif (2) est formé pour transmettre une information vers ledit moyen d'interface (3), via ladite liaison de transmission d'information (4) ;
   - ledit moyen d'interface (3) comporte un premier moyen (10) pour déterminer une image correspondant à la représentation d'une information transmise, et un second moyen (13) pour déterminer un second code de contrôle qui est représentatif de ladite image ;
   - ledit système (1) comporte, de plus, des moyens de comparaison (14, 15) pour comparer entre eux des premier et second codes de contrôle ; et
   - ledit moyen d'interface (3) est formé pour afficher, sur ledit écran de visualisation (12), une image correspondant à la représentation d'une information transmise, uniquement si les premier et second codes de contrôle correspondants sont identiques.

5. Système selon la revendication 4,
   **caractérisé en ce que** lesdits moyens de comparaison (14) font partie dudit dispositif (2).

6. Système selon la revendication 4,
   **caractérisé en ce que** lesdits moyens de comparaison (15) font partie dudit moyen d'interface (3).

Fig. 1

Fig. 2

EP 1 484 672 A1

**Office européen des brevets**

**RAPPORT DE RECHERCHE EUROPEENNE**

Numéro de la demande

EP 04 29 1193

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 6 442 571 B1 (HAFF MAURICE W ET AL) 27 août 2002 (2002-08-27) * colonne 28, ligne 50 - colonne 28, ligne 62 * | 1-6 | G06F3/14 H04L29/06 |
| A | US 5 768 528 A (STUMM CHRISTIAN) 16 juin 1998 (1998-06-16) * colonne 1, ligne 64 - colonne 2, ligne 8 * * colonne 7, ligne 47 - colonne 8, ligne 39 * | 1-6 | |
| A | MCCARTNEY R ET AL: "An ARINC D-Size, liquid crystal display for aircraft primary flight instruments" DIGITAL AVIONICS SYSTEMS CONFERENCE, 1994. 13TH DASC., AIAA/IEEE PHOENIX, AZ, USA 30 OCT.-3 NOV. 1994, NEW YORK, NY, USA,IEEE, 30 octobre 1994 (1994-10-30), pages 620-625, XP010127068 ISBN: 0-7803-2425-0 * le document en entier * | 1,4 | |

DOMAINES TECHNIQUES RECHERCHES (Int.Cl.7)

G06F
H04L

Le présent rapport a été établi pour toutes les revendications

| Lieu de la recherche | Date d'achèvement de la recherche | Examinateur |
|---|---|---|
| La Haye | 17 septembre 2004 | Van Roost, L |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**                    EP 04 29 1193

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-09-2004

| Document brevet cité au rapport de recherche | | Date de publication | Membre(s) de la famille de brevet(s) | | Date de publication |
|---|---|---|---|---|---|
| US 6442571 | B1 | 27-08-2002 | US | 6219669 B1 | 17-04-2001 |
| | | | US | 2002184224 A1 | 05-12-2002 |
| | | | US | 2004049515 A1 | 11-03-2004 |
| | | | AU | 757557 B2 | 27-02-2003 |
| | | | AU | 1460599 A | 07-06-1999 |
| | | | BR | 9815290 A | 04-12-2001 |
| | | | CA | 2309660 A1 | 27-05-1999 |
| | | | EA | 2886 B1 | 31-10-2002 |
| | | | EP | 1038368 A2 | 27-09-2000 |
| | | | JP | 2002506246 T | 26-02-2002 |
| | | | WO | 9926121 A2 | 27-05-1999 |
| US 5768528 | A | 16-06-1998 | AU | 2608397 A | 05-01-1998 |
| | | | WO | 9745786 A1 | 04-12-1997 |

EPO FORM P0460

Pour tout renseignement concernant cette annexe : voir Journal Officiel de l'Office européen des brevets, No.12/82